# EUROPEAN PATENT SPECIFICATION

(11) **EP 1 883 256 B1**
(45) Date of publication and mention of the grant of the patent: **22.07.2009**
(21) Application number: 06805096.2
(22) Date of filing: 27.10.2006
(51) Int. Cl.: H04W 4/06

(54) **A METHOD, SYSTEM AND DEVICE FOR REALIZING THE RECORD OF THE SPEECH DATA IN SEMI-DUPLEX TALKING**
VERFAHREN, SYSTEM UND GERÄT ZUR AUFNAHME VON SPRACHDATEN IN EINEM HALB-DUPLEX-GESPRÄCH
PROCÉDÉ, SYSTÈME ET APPAREIL D'ENREGISTREMENT DE DONNÉES VOCALES AU COURS D'UNE CONVERSATION EN SEMI-DUPLEX

(30) Priority: 06.02.2006 CN 200610003242
(43) Date of publication of application: 30.01.2008
(73) Proprietor: Huawei Technologies Co., Ltd., Longgang District, Shenzhen Guangdong 518129 (CN)
(72) Inventor: LI, Zhibin, Shenzhen Guangdong_518129 (CN); SHEN, Hai, Shenzhen Guangdong_518129 (CN); WU, Xiangdi, Shenzhen Guangdong_518129 (CN); CHEN, Guangjing, Shenzhen Guangdong_518129 (CN)
(74) Representative: Thun, Clemens
(86) International application number: PCT/CN2006/002891
(87) International publication number: WO 2007/090324

(56) References cited:
- EP-A- 0 893 902
- WO-A-20/05107224
- CA-A1- 2 511 160
- CN-A- 1 508 773
- CN-A- 1 725 881
- US-A1- 2004 032 843
- US-A1- 2004 224 678

## Description

### Field of the Technology

The present invention relates to mobile communication technologies, and more particularly, to a method, a system and apparatuses for recording voice data in a half-duplex communication.

### Background of the Invention

A Push to Talk over Cellular (PTT) service is a voice communication service based on half-duplex point-to-point and point-to-multipoint technologies of a mobile network. In the PTT service, a user performs a call with other users or user groups through pressing a key of a terminal; voice and data connections may simultaneously be established during a call; a user is able to define a group and perform a call in the group.

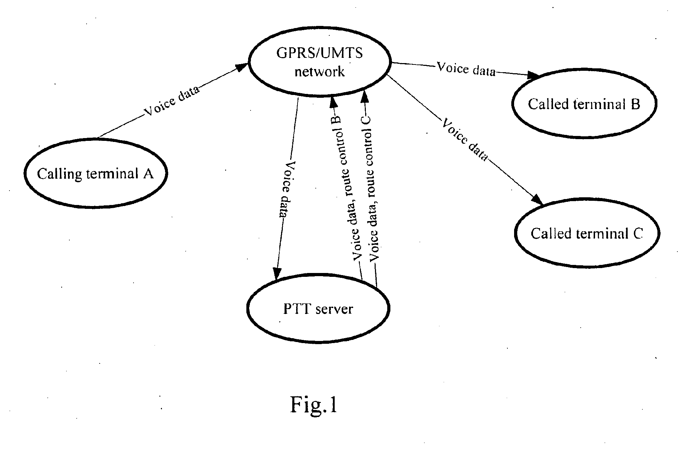

Figure 1 shows the implementation of PTT service. In a simple illustrative embodiment, a calling terminal A in Figure 1 calls two called terminals B and C. In practical, the number of the called terminals is determined according to the number of members in a user group and may be from one to any. A PTT server stores user data of the user group. The user data includes access rights, authentication information, preconfigured group qualifications, routes of Session Initial Protocol (SIP) messages etc. Before starting a call, the calling terminal A applies a speech right from the PTT server via a wireless network, and the wireless network may be a General Packet Radio Service (GPRS) network or a Universal Mobile Telecommunications System (UMTS) network. After confirming the speech right, the PTT server returns acknowledgement information to the calling terminal A, and notifies the called terminals B and C which are other members in the call. When the call is being performed, voice and data from the calling terminal A are packaged as data packages, and access the PTT server via the wireless network. The PTT server copies the data packages according to an amount of members in the call, and distributes the data packages to each called terminal according to routes of Session Initial Protocol (SIP).

At present, during the implementation of PTT service, the PTT server is only capable of copying data packages of a calling user and distributing the data packages to the called users without saving the data packages. In this way, users are unable to record some important voice data of PTT calls while the voice data may be an important voucher for making a decision sometimes. For operators, it is unable to implement telecommunication supervision for PTT calls by using a PTT service mode without saving call contents.

### Summary of the Invention

In view of the above, the present invention provides a method for recording voice data in a half-duplex communication according to claim 1.

A method for recording voice data in a half-duplex communication includes: acquiring voice data sent from a participant having the right to speak in a call; and generating a voice data record according to the voice data, and storing the voice data record.

The present invention also provides a system for recording voice data in a half-duplex communication according to claim 15.

A system for recording voice data in a half-duplex communication includes: a server, for acquiring voice data from a participant having the right to speak in a call; a voice data recording node, for generating a voice data record according to the voice data; and a data storing node, for storing the voice data record.

The present invention also provides a server for recording voice data in a half-duplex communication according to claim 22.

A server for recording voice data in a half-duplex communication includes: a first module, for acquiring voice data from a participant having the right to speak in a call; and a second module, for sending the voice data to a voice data recording node to generate a voice data record according to the voice data.

The present invention also provides a computer program product according to claim 25.

As can be seen from the above technical solution, a server sends voice data from a terminal to a voice data recording node, through interaction between the voice data recording node and the server, and the voice data recording node generates a voice data record. Then, the voice data recording node stores the generated voice data record into a data storing node, so that recording call contents is implemented. By defining a filter condition, important call contents may selectively be recorded, but it is unnecessary to record all call contents, so as to save storage space. In the procedure of searching for voice data, operators and users are able to search for a voice data record through an agent gateway or a terminal. And by defining an acquiring condition of the voice data record, leakages of the call contents is avoided, so as to ensure the security of the voice data records.

WO 2005/107224 discloses a process for compiling a protocol during a push-to-talk session with multiple participating communication units. An exclusive transmission right for transmitting at least one useful message is allocated to only one of the communication units at a time for a duration of authorization. During the duration of authorization, only a reception right for receiving at least one useful message is allocated to the other communication units. Moreover, at least one useful message of the session is received by a protocol unit and stored in a protocol file on a storage module.

CA 2 511 160 discloses a mobile station includes a wireless transceiver. The wireless transceiver is operative to receive a PTT key message; receive voice data of a PTT voice communication following the PTT key message; and receive a PTT dekey message following the voice data. The processor is operative to cause the voice data of the PTT voice communication to be recorded in the memory based on receiving the PTT key message, and cause the recording of voice data of the PTT voice communication to be terminated based on receiving the PTT dekey message.

### Brief Description of the Drawings

Figure 1 is a schematic diagram illustrating a conventional PTT service.
Figure 2 is a schematic diagram illustrating a system networking in accordance with an embodiment of the present invention.
Figure 3 is a work flowchart illustrating an operator definition mode in accordance with an embodiment of the present invention.
Figure 4 is a work flowchart illustrating a user definition mode in accordance with an embodiment of the present invention.
Figure 5 is a flowchart of searching for a voice data record using an acquiring condition of the voice data record in accordance with an embodiment of the present invention.

### Detailed Description of the Invention

The present invention is further described as follows with reference to embodiments and accompanying drawings for a more explicit explanation of the object, technical solution and beneficial effects of the present invention.

For the purpose of implementing a function of recording voice data of a PTT call, a voice data recording node and a data storing node are added in a conventional PTT system. The voice data recording node is mainly capable of managing voice data including: generating voice data records based on received voice data, managing the data storing node, storing filtering conditions of voice data and providing a management interface for externals. The data storing node is mainly capable of storing voice data records. In addition, an agent gateway is further configured as an interface for external interactive, so that the voice data recording node may conveniently provide the management interface and storage function for the externals.

In particular, the voice data recording node is capable of storing a filtering condition of PTT voice data currently recorded (referred to as a filtering condition hereinafter). For example, the filtering condition includes an initiator of a PTT call and a receiver of the PTT call (including a user, a group or an IP address), time period of voice data of the PTT call, participant etc. Here, the participant may be a terminal issuing a voice. The voice data recording node records voice data of PTT calls according to the filtering condition. There are two methods for defining a filtering condition: one is to define the filtering condition by an operator according to requirements; the other is to define the filtering condition by a user through a terminal corresponding to the user. That is, a PTT terminal may be configured to define filtering conditions only for voice data of PTT calls initiated or joined by the user of the PTT terminal, or PTT calls which the user is invited to join by other users. Meanwhile, such voice data records corresponding to the voice data may only be accessed by definers or users designated by the definers.

The voice data recording node is further capable of packaging voice data and related description information corresponding to the voice data to be recorded. Here, the voice data and related description information corresponding to the voice data are sent from a PTT server. The related description information includes identification of a PTT call, a participant, time and a record subscriber corresponding to the voice data etc. And then the voice data recording node outputs the packaged voice data and description information to the voice data storing node. All voice data and related description information of all PTT terminals participating in one PTT call are packaged to generate one voice data record. Since the PTT call is in a half-duplex mode, a PTT terminal is configured to acquire a speech right before starting a PTT call, and therefore voice data of different PTT terminals may be distinguished. Thus, it is possible to record and package all voice data and related description information for each PTT terminal participating in a PTT call to generate a voice data record corresponding to the PTT terminal, respectively, or to package a piece of voice data of a PTT terminal to generate a voice data record. Here, a piece of voice data of the PTT terminal refers to voice data and related description information of the PTT terminal from the time of acquiring a speech right to the time of losing the speech right by the PTT terminal. In this way, the voice data record of all PTT terminals participating in a PTT call can be searched, or the voice data record of a certain PTT terminal participating in the PTT call can be searched, or a certain piece of voice data records of a certain PTT terminal participating in the PTT call can be searched.

In addition, the voice data recording node also provides an external searching interface and a management interface. Through the external searching interface, a user may search the data storing node for a voice data record via a mobile station terminal or via a Web page. The management interface provides a user agent for externals as a uniform entrance for Web users or operators.

The voice data recording node connects to the PTT server through a voice data transmission interface and a signaling transmission interface. Each of the voice data transmission interface and the signaling transmission interface is carried by using an Internet Protocol (IP).

The data storing node is capable of storing voice data records and providing functions for searching voice data and other related data. Due to the large magnitude of voice data of PTT calls, the voice data and other related data are necessary to be encoded; therefore the data storing node may provide encoding processing and decoding professing for the voice data and other related data. The data storing node also provides a data management function. For example, the data storing node presets a storage expire time, and deletes voice data records automatically when the storage time of the voice data records of the PTT calls expires.

The data storing node may be distributed and managed by the voice data recording node.

The agent gateway is capable of providing ways for a user to use the external searching interface and the management interface provided by the voice data recording node, other than via a PTT terminal. For example, the user may use the external searching interface and the management interface via a Web or a Wireless Application Protocol (WAP) terminal to acquire a voice data record or to set a filtering condition of a recorded PTT call etc. The agent gateway, also served as an agent of a manager, provides a function for operators to remotely manage the voice data recording node. The agent gateway may also provide a storage capability interface or an interactive capability interface to services which are located in other networks or use other protocols.

The PTT server may also be changed correspondingly. For example, a voice management module is added in the PTT server. The voice management is configured to provide signaling and data interaction which are related to the voice data recording node. Here, the signaling includes: signaling for acquiring a filtering condition of PTT call voice data, signaling for starting or terminating recording voice data records of the PTT call or signaling for acquiring a voice data record etc. The voice management is also used to send voice data packages according to a filtering condition and adjunct information of the voice data packages to the voice data recording node. Here, the adjunct information includes: an identification of the PTT call, a participant, call time and a subscriber corresponding to the voice data packages. The voice management module may further provide a function of acquiring a voice data record from the voice data recording node according to requirements of users, and the PTT server sends the voice data records to the users.

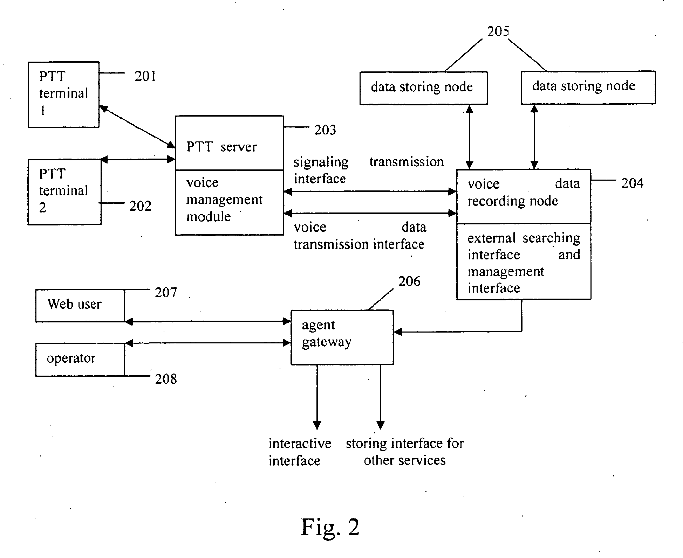

Figure 2 is a schematic diagram illustrating a networking of a PTT system in accordance with an embodiment of the present invention.

The 201 and 202 are PTT terminals. In a simple illustrative embodiment, the embodiment only provides two PTT terminals herein while there may be multiple PTT terminals in practice. A PTT server 203 includes a voice management module. The connection among the PTT terminal 201, the PTT terminal 202 and the PTT server 203 is similar to that in Figure 1 and will not be further described herein.

A voice data recording node 204 connects to the voice management module in the PTT server 203 via a signaling transmission interface and a voice data transmission interface; the voice data recording node 204 also connects to multiple data storing nodes 205. In addition, the voice data recording node 204 connects to an agent gateway 206 via an external searching interface and a management interface. A Web user 207 and an operator 208 respectively connect to the agent gateway 206. In addition, the agent gateway 206 may also provide an interactive interface and a storage interface for other services, and provide a storage capability interface or an interactive capability interface to services which are located in other networks or use other protocols.

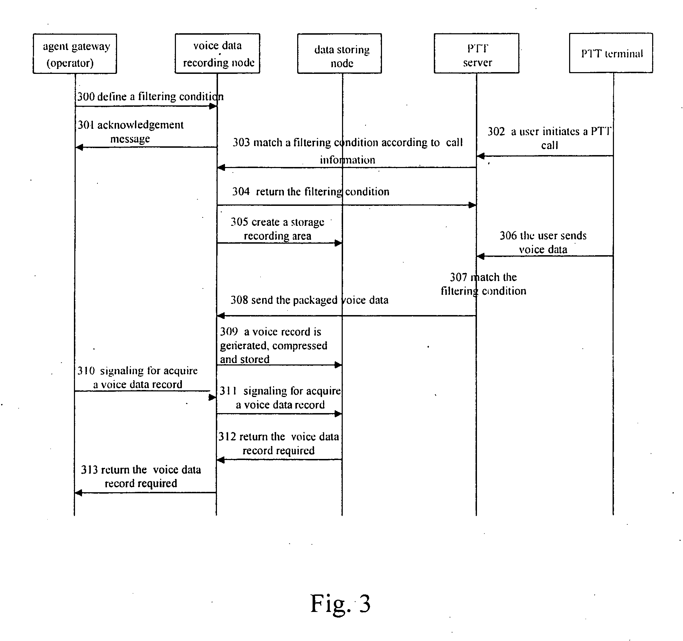

Figure 3 shows a workflow illustrating a process of defining a filtering condition by an operator in an embodiment of the present invention.

Step 300 and 301: an operator defines a filtering condition of PTT call voice data using an agent gateway via a management interface of a voice data recording node, and then the operator saves the filtering condition into a filtering condition database of the voice data recording node. After the definition is finished, the voice data recording node returns an acknowledgement message to the agent gateway. The above processes are performed once and unnecessary to be performed in every PTT calls.

Step 302: a PTT terminal submits a request of initiating a call to a PTT server.

Step 303 and 304: after receiving the request of initiating the PTT call, the PTT server notifies the voice data recording node of call information of the newly initiated call via a signaling transmission interface. The voice data recording node searches through the filtering condition database according to the call information; if there is a matched filtering condition, the voice data recording node returns a notification message carrying the filtering condition to the PTT server via a signaling transmission interface, so as to notify that voice data of the call is to be recorded.

Step 305: the voice data recording node notifies a data storing node of establishing a storage recording area corresponding to the call.

Steps 306 to 308: the PTT terminal sends voice data to the PTT server. The PTT server selects matched voice data according to the filtering condition while copying and forwarding the voice data. The PTT server packages the matched voice data and sends the packaged voice data to the voice data recording node via a voice data transmission interface.

Step 309: after receiving the voice data of the PTT call, the voice data recording node packages the voice data with the call information to generate a voice data record, and then the voice data recording node sends the voice data record to the data storing node. The data storing node encodes the received voice data record and stores the encoded voice data record to the designated storage recording area.

Steps 310 to 313: when the call is being performed or after the call is finished, the operator searches for a required voice data record by using the agent gateway via an external searching interface provided by the voice data recording node. The voice data recording node acquires decoded voice data record from the data storing node and returns the decoded voice data record to the agent gateway.

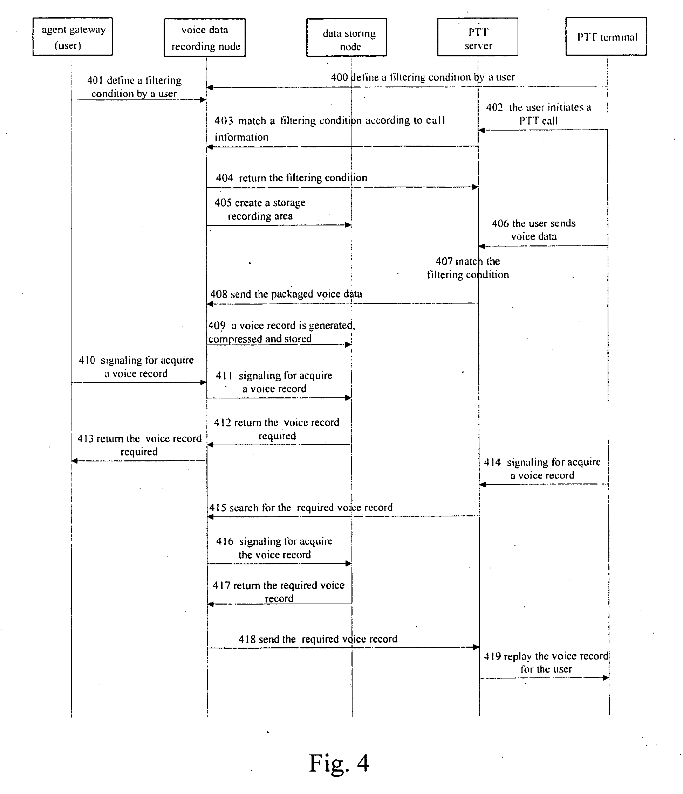

Figure 4 shows a workflow illustrating a process of defining a filtering condition by a user in an embodiment of the present invention.

Steps 400 and 401: a user defines a filtering condition of voice data by using a PTT terminal or via an agent gateway, and the filtering condition is stored in a filtering condition database of a voice data recording node. When the user defines the filtering condition by using the PTT terminal, the user may directly define the filtering condition via the PTT terminal, or the user may select one of the filtering conditions predefined on the PTT server via the PTT terminal. After the definition is finished, the voice data recording node returns an acknowledgement message to the PTT terminal or the agent gateway. Both of these two steps aim to define the filtering condition. Only one step needs to be selected and performed before a call starts, and the defined filtering condition may be used in subsequent call. It is unnecessary to define the filtering condition before each call.

Step 402: a PTT terminal submits a request of initiating a call to a PTT server. The request includes a demand for recording voice data.

Steps 403 and 404: after receiving the request of initiating the call, the PTT server determines whether there is a demand for recording voice data; if so, the PTT server notifies the voice data recording node of call information of the newly initiated call via a signaling transmission interface. The voice data recording node searches through the filtering condition database according to the call information. If there is a matched filtering condition, the voice data recording node returns a notification message carrying the matched filtering condition to the PTT server via the signaling transmission interface, so as to notify that voice data of the call needs to be recorded, and then subsequent steps are performed. Otherwise, a conventional PTT call procedure is performed.

Step 405: the voice data recording node notifies a data storing node of establishing a storage recording area corresponding to the call.

Steps 406 to 408: the PTT terminal sends voice data to the PTT server. The PTT server selects matched voice data according to the filtering condition while copying and forwarding the voice data, and then the PTT server packages the matched voice data and sends the packaged voice data to the voice data recording node via a voice data transmission interface.

Step 409: after receiving the voice data of the PTT call, the voice data recording node packages the voice data with the call information to generate a voice data record, and then the voice data recording node sends the voice data record to the data storing node. The data storing node encodes the received voice data record and stores the encoded voice data record into the designated storage recording area.

Steps 410 to 413: whenever the call is ongoing or after the call is finished, the user searches for a required voice data record by using the agent gateway via an external searching interface provided by the voice data recording node. The voice data recording node acquires decoded voice data record from the data storing node and returns the decoded voice data record to the agent gateway.

Step 414: when the call is ongoing or after the call is finished, the user may also sends signaling for acquiring a voice data record to the PTT server by using the PTT terminal.

Steps 415 to 417: after receiving the signaling, the PTT server searches the voice data recording node for the required voice data record via an external searching interface. The voice data recording node sends signaling for acquiring a voice data record to the data storing node. After receiving the signaling, the data storing node decodes the required voice data record and sends the decoded voice data record to the voice data recording node.

Steps 418 to 419: the voice data recording node sends the required voice data record to the PTT server, and then the PTT server sends the required voice data record to the PTT terminal.

The filtering condition used in the above procedure may also be defined or changed via the PTT terminal, and the defined or changed filtering condition may be used for filtering voice data after the filtering condition is defined or changed. The request for recording voice data in step 402 may also be sent during the ongoing call, and before the request is sent, the conventional PTT call is ongoing. After receiving the request, the PTT server notifies the voice data recording node, and the procedure for recording voice data is performed. Therefore, the ways of applying the embodiments of the present invention will be more flexible and more applicable to various requirements of users.

In the system of the embodiments of the present invention, except that the definer who defines the filtering conditions can search for the stored voice data records according to the filtering conditions, other users may also search for the stored voice data records. Therefore, an acquiring condition for a voice data record may be predefined, i.e. the acquiring condition is predefined to detect users who are qualified to acquire the voice data record. The acquiring condition may be defined by an operator, or be defined by a user who defines the filtering conditions via the PTT terminal or the agent gateway, and then the acquiring condition is stored in the voice data recording node. The acquiring condition for a voice data record may correspond to a call record of a certain user in a certain call, a call record of a certain time period, a call record of a user within a certain group, or any combination of the above cases.

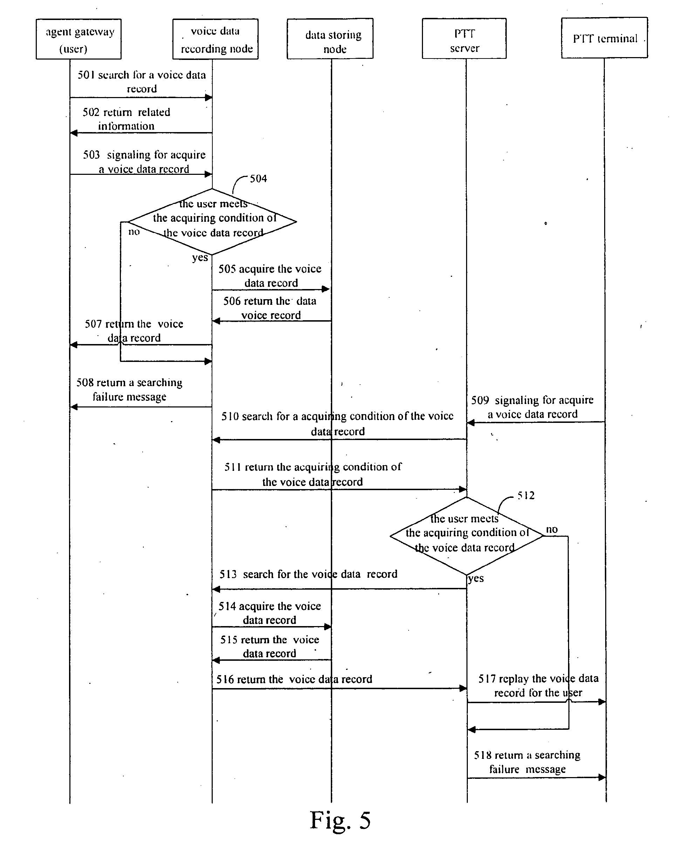

Figure 5 shows a flowchart of searching for a voice data record in accordance with an embodiment of the present invention. Steps 501 to 508 show a flowchart of searching for a voice data record via an agent gateway by a user. Steps 509 to 518 show a flowchart of searching for a voice data record via a PTT terminal by a user. The above two flows are independent of each other which are described as follows.

Steps 501 to 502: a user sends search signaling to a voice data recording node via an agent gateway. After receiving the signaling, the voice data recording node returns related information of voice data records which can be searched for by the user to the agent gateway.

Step 503: the user sends signaling for acquiring a certain voice data record to the voice data recording node via the agent gateway.

Step 504: the voice data recording node determines whether the user accords with an acquiring condition according to the voice data record; if so, steps 505 to 507 are performed; otherwise, step 508 is performed.

Step 505: the voice data recording node sends a signaling for acquiring the searched-for voice data record to a data storing node.

Steps 506 and 507: after receiving the signaling, the data storing node sends the voice data record to the voice data recording node. Then the voice data recording node sends the voice data record to the agent gateway. And the workflow is terminated.

Step 508: the voice data recording node returns a searching failure message to the agent gateway. And the workflow is terminated.

Step 509: a user sends signaling for acquiring a voice data record to a PTT server via a PTT terminal.

Steps 510 and 511: the PTT server searches for an acquiring condition of the voice data record to be acquired from the voice data recording node. Then the voice data recording node returns the acquiring condition to the PTT server.

Step 512: the PTT server determines whether the user accords with the acquiring condition of the voice data record to be acquired; if so, steps 513 to 517 are performed; otherwise, step 518 is performed.

Steps 513 to 515: the PTT server sends signaling for searching for the voice data record to the voice data recording node. After receiving the signaling, the voice data recording node sends signaling for acquiring the searched-for voice data record to the data storing node. Then the data storing node sends the searched-for voice data record to the voice data recording node.

Steps 516 and 517: the voice data recording node sends the searched-for voice data record to the PTT server, and then the PTT server sends the voice data record to the PTT terminal. And the workflow is terminated.

Step 518: the PTT server returns a searching failure message to the PTT terminal. And the workflow is terminated.

The above steps are basically similar to the flows of searching for the voice data record of the PTT call by the user described in Figures 3 and 4, and the main difference is to add a determination for the acquiring condition of the voice data record, i.e. step 504 and step 512. When the search user accords with the acquiring condition, proceed to subsequent steps which are similar to Figures 3 and 4. When the search user does not accord with the acquiring condition, the searching failure message is returned to the user.

It should be understood by those skilled in the art that, the system and method provided by the present invention may be used in all half-duplex communication systems including a client and a server. The forgoing description is only described by taking the PTT system for example and is not for use in limiting the protection scope of the present invention to the PTT system.

The foregoing description is only preferred embodiments of the present invention and is not for use in limiting the protection scope thereof. All modifications, equivalent replacements or improvements made within the principles of the present invention should be covered under the protection scope of the present invention as defined by the appended claims.

## Claims

1. A method for recording voice data in a half-duplex communication, comprising:
acquiring voice data sent from a participant having the right to speak in a call (306); and
**characterized in that**
the method further comprise:
acquiring a filtering condition corresponding to the call (304), the filtering condition being configured by a user; and
selecting the voice data according to the filtering condition from the voice data acquired (307);
generating a voice data record according to the voice data according to the filtering condition (308), and storing the voice data record (309).

2. The method of Claim 1, **characterized in, that** generating the voice data record according to the voice data comprises:
generating a voice data record including all voice data in the call according to the call of the voice data; or
generating a voice data record including voice data of the participant having the right to speak in the call according to the participant sending the voice data; or
generating a voice data record including voice data of the participant having the right to speak from the time of acquiring the right to speak to the time of losing the right to speak in the call according to the time duration occupied by the participant sending the voice data.

3. The method of Claim 1 or 2, **characterized in, that** the filtering condition and the voice data is acquired by a server, and the voice data record is generated by a voice data recording node and stored in a data storing node.

4. The method of Claim 3, further comprising:
creating a record area on the data storing node; wherein
storing the voice data record comprises: storing the voice data record into the record area.

5. The method of Claim 3, wherein the filtering condition corresponding to the call is acquired from the voice data recording node.

6. The method of Claim 5, further comprising:
configuring, by the user, the filtering condition to be stored in the voice data recording node (400, 401).

7. The method of Claim 6, wherein configuring the filtering condition to be stored in the voice data recording node comprises:
receiving preset filtering conditions on the server; and
selecting a filtering condition from the filtering conditions as the filtering condition to be stored in the voice data recording node.

8. The method of Claim 5, **characterized in, that** acquiring the filtering condition corresponding to the call form the voice data recording node comprises:
receiving the voice data recording node of call information;
matching a filtering condition according the call information; and
sending the filtering condition to the server.

9. The method of any of Claims 1 to 8, further comprising: encoding, by the data storing node, the voice data record before storing the voice data record.

10. The method of any of Claims 1 to 8, further comprising: presetting a storage expire time; deleting, by the data storing node, the voice data record if the storage time of the voice data record expires.

11. The method of Claim 1, further comprising:
receiving a search request for a voice data record from a searcher (310, 410, 414, 503, 509);
acquiring the voice data record corresponding to the search request (312, 412, 418, 506, 516); and
returning the voice data record to the searcher (313, 413, 419, 507, 517).

12. The method of Claim 11, **characterized in, that** the search request is received via an agent gateway, and the voice data record is returned via the agent gateway; or the search request is received via a server, and the voice data record is returned via the server.

13. The method of Claim 11, **characterized in, that** acquiring the voice data record corresponding to the searching request comprises:
acquiring the voice data record corresponding to the searching request if the searcher accords with a pre-stored acquiring condition (504, 512).

14. The method of Claim 11, **characterized in, that** receiving the search request for the voice data record from a searcher comprises:
sending an acquiring condition corresponding to a search request (511); and
receiving the search request if the searcher accords with the acquiring condition (513).

15. A system for recording voice data in a half-duplex communication, comprising:
a server (203), for acquiring voice data from a participant having the right to speak in a call;
**characterized in that**
the server (203) is further configured to acquire a filtering condition corresponding to the call, the filtering condition being configured by a user; and select the voice data according to the filtering condition from the voice data acquired; and
the system further comprises:
a voice data recording node (204), for generating a voice data record according to the voice data according to the filtering condition; and
a data storing node (205), for storing the voice data record.

16. The system of Claim 15, **characterized in, that**
the voice data recording node (205) is further configured to store the filtering condition; and
the server (203) is configured to acquire the filtering condition corresponding to the call from the voice data recording node (205).

17. The system of Claim 15, **characterized in, that**
the voice data recording node (204) is further configured to receive via the server (203) a search request for a voice data record from a searcher, acquire the voice data record corresponding to the search request and return the voice data record to the searcher via the server (203).

18. The system of Claim 17, **characterized in, that**
the voice data recording node (204) is further configured to store a preset acquiring condition of a voice data record; and
the server (203) is further configured to acquire an acquiring condition corresponding to the search request and send the search request to the voice data recording node (204) if the searcher accords with the acquiring condition.

19. The system of Claim 15, further comprising:
an agent gateway (206), for sending a search request for a voice data record received from a searcher to the voice data recording node (204) and returning the voice data record corresponding to the search request received from the voice data recording node (204) to the searcher; wherein
the voice data recording node (204) is further configured to acquire the voice data record corresponding to the search request and return the voice data record to the agent gateway (206).

20. The system of Claim 19, **characterized in, that** the voice data recording node (204) is further configured to store an acquiring condition of a voice data record and acquire a voice data record corresponding to the search request if the searcher accords with the acquiring condition.

21. The system of Claim 15, **characterized in, that** the participant having the right to speak comprises a Push to Talk over Cellular service terminal, and the server comprises a Push to Talk over Cellular service server.

22. A server for recording voice data in a half-duplex communication, comprising:
a first module, for acquiring voice data from a participant having the right to speak in a call; and
**characterized in that**
the server further comprises:
a second module, for filtering the voice data according to a filtering condition corresponding to the call, the filtering condition being configured by a user; and send the voice data to a voice data recording node if the voice data accords with the filtering condition to generate a voice data record.

23. The server of Claim 22, **characterized in, that** the second module is further configured to receive a search request for a voice data record from a searcher, send the search request to the voice data recording node, and return a voice data record corresponding to the search request to the searcher.

24. The server of Claim 23, **characterized in, that** the second module is further configured to determine whether the searcher accords with a preset acquiring condition corresponding to the search request and send to the voice data recording node the search request if the searcher accords with the preset acquiring condition.

25. A computer program product comprising computer program code, which, when executed by a computer unit, will cause the computer unit to perform the steps of a method for recording voice data in a half-duplex communication comprising:
acquiring voice data sent from a participant having the right to speak in a call; and
**characterized in that**
the steps further comprise:
acquiring a filtering condition corresponding to the call, the filtering condition being configured by a user; and
selecting the voice data according to the filtering condition from the voice data acquired;
generating a voice data record according to the voice data according to the filtering condition, and storing the voice data record.

26. The computer program product according to Claim 25, **characterized in**, the steps further comprising:
sending a search request for a voice data record to the system;
receiving a voice data record corresponding to the search request acquired by the system.

## Patentansprüche

1. Verfahren zur Aufnahme von Sprachdaten in einem Halbduplex-Gespräch, umfassend:
Erhalten von Sprachdaten, die von einem Teilnehmer mit einer Sprechberechtigung in einem Anruf (306) gesendet wurden; und
**dadurch gekennzeichnet, dass**
das Verfahren ferner umfasst:
Erhalten einer Filterbedingung, die mit dem Anruf (304) korrespondiert, wobei die Filterbedingung durch einen Benutzer konfiguriert ist; und
Auswählen der Sprachdaten, die der Filterbedingung entsprechen, aus den erhaltenen Sprachdaten (307);
Erzeugen einer Sprachdatenaufnahme, die den Sprachdaten entsprechen, die der Filterbedingung entsprechen (308), und Speichern der Sprachdatenaufnahme (309).

2. Verfahren nach Anspruch 1, **dadurch gekennzeichnet, dass** das Erzeugen der Sprachdatenaufnahme, die den Sprachdaten entspricht, umfasst:
Erzeugen einer Sprachdatenaufnahme, die alle Sprachdaten in dem Anruf entsprechend dem Anruf der Sprachdaten umfasst; oder
Erzeugen einer Sprachdatenaufnahme, die Sprachdaten des Teilnehmers mit der Berechtigung, in dem Anruf zu sprechen, der dem Teilnehmer entspricht, der die Sprachdaten sendet umfasst; oder
Erzeugen einer Sprachdatenaufnahme, die Sprachdaten des Teilnehmers umfasst, der die Berechtigung hat, von dem Zeitpunkt, an dem er die Sprechberechtigung erhält, bis zu dem Zeitpunkt, an dem er die Sprechberechtigung verliert, in dem Anruf zu sprechen, entsprechend der Zeitdauer, die durch den Teilnehmer besetzt wird, der die Sprachdaten sendet.

3. Verfahren nach Anspruch 1 oder 2, **dadurch gekennzeichnet, dass** die Filterbedingungen und die Sprachdaten durch einen Server erhalten werden und die Sprachdatenaufnahme durch einen Sprachdatenaufnahmeknoten erzeugt wird und in einem Datenspeicherknoten gespeichert wird.

4. Verfahren nach Anspruch 3, ferner umfassend:
Schaffen eines Aufnahmebereichs auf dem Datenspeicherknoten; wobei das Speichern der Sprachdatenaufnahme umfasst: Speichern der Sprachdatenaufnahme in dem Aufnahmebereich.

5. Verfahren nach Anspruch 3, wobei die Filterbedingung, die dem Anruf entspricht, von dem Sprachdatenaufnahmeknoten erhalten wird.

6. Verfahren nach Anspruch 5, ferner umfassend:
Konfigurieren der Filterbedingung durch den Benutzer, die in dem Sprachdatenaufnahmeknoten gespeichert werden soll (400,401).

7. Verfahren nach Anspruch 6, wobei das Konfigurieren der Filterbedingung, die in dem Sprachdatenaufnahmeknoten gespeichert werden soll, umfasst:
Empfangen von voreingestellten Filterbedingungen auf dem Server; und
Auswählen einer Filterbedingung aus den Filterbedingungen als die Filterbedingung, die in dem Sprachdatenaufnahmeknoten gespeichert werden soll.

8. Verfahren nach Anspruch 5, **dadurch gekennzeichnet, dass** das Erhalten der Filterbedingung, die mit dem Anruf von dem Sprachdatenaufnahmeknoten korrespondiert, umfasst:
Empfangen des Sprachdatenaufnahmeknoten von Anrufinformationen; Anpassen eine Filterbedingung entsprechend der Anrufinformation; und
Senden der Filterbedingung an den Server.

9. Verfahren nach einem der Ansprüche 1 bis 8, ferner umfassend: Kodieren der Sprachdatenaufnahme durch den Datenspeicherknoten, bevor die Sprachdatenaufnahme gespeichert wird.

10. Verfahren nach einem der Ansprüche 1 bis 8, ferner umfassend: Voreinstellen einer Speicherungsablaufzeit; Löschen der Sprachdatenaufnahme durch den Datenspeicherknoten, falls die Speicherungszeit der Sprachdatenaufnahme abläuft.

11. Verfahren nach Anspruch 1, ferner umfassend:
Empfangen einer Suchanfrage nach einer Sprachdatenaufnahme von einem Sucher (310,410,414,503,509);
Erhalten der Sprachdatenaufnahme, die der Suchanfrage entspricht (312,412,418,506,516); und
Zurücksenden der Sprachdatenaufnahme an den Sucher (313,413,419,507,517).

12. Verfahren nach Anspruch 11, **dadurch gekennzeichnet, dass** die Suchanfrage über ein Agent-Gateway empfangen wird und die Sprachdatenaufnahme über das Agent-Gateway zurückgesendet wird; oder dass die Suchanfrage über einen Server empfangen wird und die Sprachdatenaufnahme über den Server zurückgesendet wird.

13. Verfahren nach Anspruch 11, **dadurch gekennzeichnet, dass** das Erhalten der Sprachdatenaufnahme entsprechend der Suchanfrage umfasst:
Erhalten der Sprachdatenaufnahme, die der Suchanfrage entspricht, falls der Sucher mit einer zuvor gespeicherten Erhaltungsbedingung übereinstimmt (504,512).

14. Verfahren nach Anspruch 11, **dadurch gekennzeichnet, dass** das Empfangen der Suchanfrage für die Sprachdatenaufnahme von einem Sucher umfasst:
Senden einer Beschaffungsbedingung, die der Suchanfrage entspricht (511); und
Empfangen der Suchanfrage, falls der Sucher mit der Beschaffungsbedingung übereinstimmt (513).

15. System zur Aufnahme von Sprachdaten in einem Halbduplex-Gespräch, umfassend:
einen Server (203), um Sprachdaten von einem Teilnehmer mit der Sprechberechtigung in einem Anruf zu erhalten; **dadurch gekennzeichnet, dass**
der Server (203) ferner konfiguriert ist, um eine Filterbedingung zu erhalten, die dem Anruf entspricht, wobei die Filterbedingung von einem Benutzer konfiguriert wird; und um die Sprachdaten, die mit der Filterbedingung übereinstimmen, aus den erhaltenen Sprachdaten auszuwählen; und
dass das System ferner umfasst:
einen Sprachdatenaufnahmeknoten (204), um eine Sprachdatenaufnahme entsprechend der Sprachdaten, die mit der Filterbedingung übereinstimmen, zu erzeugen; und
einen Datenspeicherknoten (205), um die Sprachdatenaufnahme zu speichern.

16. System nach Anspruch 15, **dadurch gekennzeichnet, dass**
der Sprachdatenaufnahmeknoten (205) ferner konfiguriert ist, um die Filterbedingung zu speichern; und
der Server (203) konfiguriert ist, um die Filterbedingung, die dem Anruf von dem Sprachdatenaufnahmeknoten (205) entspricht, zu erhalten.

17. System nach Anspruch 15, **dadurch gekennzeichnet, dass**
der Sprachdatenaufzeichnungsknoten (204) ferner konfiguriert ist, um über den Server (203) eine Suchanfrage nach einer Sprachdatenaufnahme von einem Sucher zu empfangen, die Sprachdatenaufnahme, die der Suchanfrage entspricht, zu beschaffen und die Sprachdatenaufnahme an den Sucher über den Server (203) zurück zu senden.

18. System nach Anspruch 17, **dadurch gekennzeichnet, dass**
der Sprachdatenaufnahmeknoten (204) ferner konfiguriert ist, um eine voreingestellte Beschaffungsbedingung einer Sprachdatenaufnahme zu speichern; und
der Server (203) ferner konfiguriert ist, um eine Beschaffungsbedingung, die der Suchanfrage entspricht, zu erhalten und die Suchanfrage an den Sprachdatenaufnahmeknoten (204) zu senden, falls der Sucher mit der Beschaffungsbedingung übereinstimmt.

19. System nach Anspruch 15, ferner umfassend:
ein Agent-Gateway (206), um eine Suchanfrage nach einer Sprachdatenaufnahme zu senden, die von einem Sucher an dem Sprachdatenaufnahmeknoten (204) empfangen wurde, und um die Sprachdatenaufnahme, die der Suchanfrage entspricht, die von dem Sprachdatenaufnahmeknoten (204) empfangen wurde, an den Sucher zurückzusenden; wobei
der Sprachdatenaufnahmeknoten (204) ferner konfiguriert ist, um die Sprachdatenaufnahme, die der Suchanfrage entspricht, zu beschaffen und die Sprachdatenaufnahme an das Agent-Gateway (206) zurück zu senden.

20. System nach Anspruch 19, **dadurch gekennzeichnet, dass** der Sprachdatenaufnahmeknoten (204) ferner konfiguriert ist, um eine Beschaffungsbedingung einer Sprachdatenaufzeichnung zu speichern und eine Sprachdatenaufzeichnung zu beschaffen, die der Suchanfrage entspricht, falls der Sucher mit der Beschaffungsbedingung übereinstimmt.

21. System nach Anspruch 15, **dadurch gekennzeichnet, dass** der Teilnehmer mit der Sprechberechtigung ein Push-to-Talk-over-Cellular-Service-Terminal umfasst und der Server einen Push-to-Talk-over-Cellular-Service-Server umfasst.

22. Ein Server zur Aufnahme von Sprachdaten in einem Halbduplex-Gespräch, umfassend:
ein erstes Modul, um Sprachdaten von einem Teilnehmer mit der Sprechberechtigung in einem Anruf zu erhalten; und
**dadurch gekennzeichnet, dass**
der Server ferner umfasst:
ein zweites Modul, um die Sprachdaten, die einer Filterbedingung entsprechend dem Anruf entsprechen, zu filtern, wobei die Filterbedingung von einem Benutzer konfiguriert wird; und die Sprachdaten an einen Sprachdatenaufnahmeknoten zu senden, falls die Sprachdaten mit der Filterbedingung übereinstimmen, um eine Sprachdatenaufnahme zu erzeugen.

23. Server nach Anspruch 22, **dadurch gekennzeichnet, dass** das zweite Modul ferner konfiguriert ist, um eine Suchanfrage nach einer Sprachdatenaufnahme von einem Sucher zu empfangen, die Suchanfrage an den Sprachdatenaufnahmeknoten zu senden und eine Sprachdatenaufnahme, die der Suchanfrage entspricht, an den Sucher zurückzusenden.

24. Server nach Anspruch 23, **dadurch gekennzeichnet, dass** das zweite Modul ferner konfiguriert ist, um zu bestimmen, ob der Sucher mit einer voreingestellten Beschaffungsbedingung übereinstimmt, die der Suchanfrage entspricht, und um die Suchanfrage an den Sprachdatenaufnahmeknoten zu senden, falls der Sucher mit der voreingestellten Beschaffungsbedingung übereinstimmt.

25. Computerprogrammprodukt umfassend einen Computerprogrammcode, der, wenn er durch eine Computereinheit ausgeführt wird, bewirkt, dass die Computereinheit die Schritte eines Verfahrens zur Aufnahme von Sprachdaten in einem Halbduplex-Gespräch durchführt, umfassend:
Erhalten von Sprachdaten, die von einem Teilnehmer mit der Sprechberechtigung in einem Anruf gesendet wurden; und
**dadurch gekennzeichnet, dass**
die Schritte ferner umfassen:
Erhalten einer Filterbedingung entsprechend dem Anruf, wobei die Filterbedingung von einem Benutzer konfiguriert wird; und
Auswählen der Sprachdaten, die mit der Filterbedingung übereinstimmen, aus den erhaltenen Sprachdaten;
Erzeugen einer Sprachdatenaufnahme, die den Sprachdaten entspricht, die mit der Filterbedingung übereinstimmen, und Speichern der Sprachdatenaufnahme.

26. Computerprogrammprodukt nach Anspruch 25, **dadurch gekennzeichnet, dass** die Schritte ferner umfassen:
Senden einer Suchanfrage nach einer Sprachdatenaufnahme an das System; Empfangen einer Sprachdatenaufnahme, die der Suchanfrage entspricht, die von dem System erhalten wurde.

## Revendications

1. Procédé pour enregistrer des données vocales dans une communication semi-duplex, comprenant l'étape consistant à:
acquérir les données vocales envoyées par un participant ayant le droit de parler dans un appel (306); et
**caractérisé en ce que**
le procédé comprend en outre les étapes consistant à:
acquérir une condition de filtrage correspondant à l'appel (304), la condition de filtrage étant configurée par un utilisateur; et
sélectionner les données vocales en fonction de la condition de filtrage parmi les données vocales acquises (307);
générer un enregistrement de données vocales conformément aux données vocales en fonction de la condition de filtrage (308), et mémoriser l'enregistrement de données vocales (309).

2. Procédé selon la revendication 1, **caractérisé en ce que** la génération de l'enregistrement de données vocales conformément aux données vocales comprend les étapes consistant à:
générer un enregistrement de données vocales comprenant toutes les données vocales dans l'appel conformément à l'appel des données vocales; ou
générer un enregistrement de données vocales comprenant les données vocales du participant ayant le droit de parler dans l'appel en fonction du participant envoyant les données vocales; ou
générer un enregistrement de données vocales comprenant les données vocales du participant ayant le droit de parler de l'instant d'acquisition du droit de parler jusqu'à l'instant de perte du droit de parler dans l'appel en fonction de la durée occupée par le participant envoyant les données vocales.

3. Procédé selon la revendication 1 ou 2, **caractérisé en ce que** la condition de filtrage et les données vocales sont acquises par un serveur, et l'enregistrement de données vocales est généré par un noeud d'enregistrement de données vocales et mémorisé dans un noeud de mémorisation de données.

4. Procédé selon la revendication 3, comprenant en outre l'étape consistant à:
créer une zone d'enregistrement sur le noeud de mémorisation de données; dans lequel
la mémorisation de l'enregistrement de données vocales comprend: la mémorisation de l'enregistrement de données vocales dans la zone d'enregistrement.

5. Procédé selon la revendication 3, dans lequel la condition de filtrage correspondant à l'appel est acquise auprès du noeud d'enregistrement de données vocales.

6. Procédé selon la revendication 5, comprenant en outre l'étape consistant à:
configurer, par l'utilisateur, la condition de filtrage à mémoriser dans le noeud d'enregistrement de données vocales (400, 401).

7. Procédé selon la revendication 6, dans lequel la configuration de la condition de filtrage à mémoriser dans le noeud d'enregistrement de données vocales comprend les étapes consistant à:
recevoir des conditions de filtrage prédéterminées sur le serveur; et
sélectionner une condition de filtrage parmi les conditions de filtrage en tant que condition de filtrage à mémoriser dans le noeud d'enregistrement de données vocales.

8. Procédé selon la revendication 5, **caractérisé en ce que** l'acquisition de la condition de filtrage correspondant à l'appel du noeud d'enregistrement de données vocales comprend les étapes consistant à:
recevoir les informations d'appel du noeud d'enregistrement de données vocales;
adapter une condition de filtrage en fonction des informations d'appel; et
envoyer la condition de filtrage au serveur.

9. Procédé selon l'une quelconque des revendications 1 à 8, comprenant en outre l'étape consistant à: encoder, par le noeud de mémorisation de données, l'enregistrement de données vocales avant de mémoriser l'enregistrement de données vocales.

10. Procédé selon l'une quelconque des revendications 1 à 8, comprenant en outre les étapes consistant à:
présélectionner un temps d'expiration de mémorisation; effacer, par le noeud de mémorisation de données, l'enregistrement de données vocales si le temps de mémorisation de l'enregistrement de données vocales a expiré.

11. Procédé selon la revendication 1, comprenant en outre les étapes consistant à:
recevoir une demande de recherche d'un enregistrement de données vocales d'un dispositif de recherche (310, 410, 414, 503, 509);
acquérir l'enregistrement de données vocales correspondant à la demande de recherche (312, 412, 418, 506, 516); et
renvoyer l'enregistrement de données vocales au dispositif de recherche (313, 413, 419, 507, 517).

12. Procédé selon la revendication 11, **caractérisé en ce que** la demande de recherche est reçue par l'intermédiaire d'une passerelle agent, et l'enregistrement de données vocales est renvoyé par l'intermédiaire de la passerelle agent; ou la demande de recherche est reçue par l'intermédiaire d'un serveur, et l'enregistrement de données vocales est renvoyé par l'intermédiaire du serveur.

13. Procédé selon la revendication 11, **caractérisé en ce que** l'acquisition de l'enregistrement de données vocales correspondant à la demande de recherche comprend l'étape consistant à:
acquérir l'enregistrement de données vocales correspondant à la demande de recherche si le dispositif de recherche s'accorde avec une condition d'acquisition mémorisée au préalable (504, 512).

14. Procédé selon la revendication 11, **caractérisé en ce que** la réception de la demande de recherche de l'enregistrement de données vocales d'un dispositif de recherche comprend les étapes consistant à:
envoyer une condition d'acquisition correspondant à une demande de recherche (511); et
recevoir la demande de recherche si le dispositif de recherche s'accorde avec la condition d'acquisition (513).

15. Système pour enregistrer des données vocales dans une communication semi-duplex, comprenant:
un serveur (203), pour acquérir les données vocales d'un participant ayant le droit de parler dans un appel;
**caractérisé en ce que**
le serveur (203) est en outre configuré pour acquérir une condition de filtrage correspondant à l'appel, la condition de filtrage étant configurée par un utilisateur; et sélectionner les données vocales en fonction de la condition de filtrage parmi les données vocales acquises; et
le système comprend en outre:
un noeud d'enregistrement de données vocales (204), pour générer un enregistrement de données vocales conformément aux données vocales en fonction de la condition de filtrage; et
un noeud de mémorisation de données (205), pour mémoriser l'enregistrement de données vocales.

16. Système selon la revendication 15, **caractérisé en ce que**
le noeud d'enregistrement de données vocales (205) est en outre configuré pour mémoriser la condition de filtrage; et
le serveur (203) est configuré pour acquérir la condition de filtrage correspondant à l'appel auprès du noeud d'enregistrement de données vocales (205).

17. Système selon la revendication 15, **caractérisé en ce que**
le noeud d'enregistrement de données vocales (204) est en outre configuré pour recevoir, par l'intermédiaire du serveur (203), une demande de recherche d'un enregistrement de données vocales d'un dispositif de recherche, acquérir l'enregistrement de données vocales correspondant à la demande de recherche et renvoyer l'enregistrement de données vocales au dispositif de recherche par l'intermédiaire du serveur (203).

18. Système selon la revendication 17, **caractérisé en ce que**
le noeud d'enregistrement de données vocales (204) est en outre configuré pour mémoriser une condition d'acquisition prédéterminée d'un enregistrement de données vocales; et
le serveur (203) est en outre configuré pour acquérir une condition d'acquisition correspondant à la demande de recherche et envoyer la demande de recherche au noeud d'enregistrement de données vocales (204) si le dispositif de recherche s'accorde avec la condition d'acquisition.

19. Système selon la revendication 15, comprenant en outre:
une passerelle agent (206), pour envoyer une demande de recherche d'un enregistrement de données vocales reçue d'un dispositif de recherche au noeud d'enregistrement de données vocales (204) et renvoyer l'enregistrement de données vocales correspondant à la demande de recherche reçu du noeud d'enregistrement de données vocales (204) au dispositif de recherche; dans lequel
le noeud d'enregistrement de données vocales (204) est en outre configuré pour acquérir l'enregistrement de données vocales correspondant à la demande de recherche et renvoyer l'enregistrement de données vocales à la passerelle agent (206).

20. Système selon la revendication 19, **caractérisé en ce que** le noeud d'enregistrement de données vocales (204) est en outre configuré pour mémoriser une condition d'acquisition d'un enregistrement de données vocales et acquérir un enregistrement de données vocales correspondant à la demande de recherche si le dispositif de recherche s'accorde avec la condition d'acquisition.

21. Système selon la revendication 15, **caractérisé en ce que** le participant ayant le droit de parler comprend un terminal de service « Push to Talk over Cellular », et le serveur comprend un serveur de service « Push to Talk over Cellular ».

22. Serveur pour enregistrer des données vocales dans une communication semi-duplex, comprenant:
un premier module, pour acquérir les données vocales d'un participant ayant le droit de parler dans un appel; et
**caractérisé en ce que**
le serveur comprend en outre:
un deuxième module, pour filtrer les données vocales en fonction d'une condition de filtrage correspondant à l'appel, la condition de filtrage étant configurée par un utilisateur; et envoyer les données vocales à un noeud d'enregistrement de données vocales si les données vocales s'accordent avec la condition de filtrage pour générer un enregistrement de données vocales.

23. Serveur selon la revendication 22, **caractérisé en ce que** le deuxième module est en outre configuré pour recevoir une demande de recherche d'un enregistrement de données vocales d'un dispositif de recherche, envoyer la demande de recherche au noeud d'enregistrement de données vocales, et renvoyer un enregistrement de données vocales correspondant à la demande de recherche au dispositif de recherche.

24. Serveur selon la revendication 23, **caractérisé en ce que** le deuxième module est en outre configuré pour déterminer si le dispositif de recherche s'accorde avec une condition d'acquisition prédéterminée correspondant à la demande de recherche et envoyer au noeud d'enregistrement de données vocales la demande de recherche si le dispositif de recherche s'accorde avec la condition d'acquisition prédéterminée.

25. Produit-programme d'ordinateur comprenant un code de programme d'ordinateur, qui, lorsqu'il est exécuté par une unité d'ordinateur, amènera l'unité d'ordinateur à effectuer les étapes d'un procédé pour enregistrer des données vocales dans une communication semi-duplex comprenant l'étape consistant à:
acquérir les données vocales envoyées par un participant ayant le droit de parler dans un appel; et
**caractérisé en ce que**
les étapes comprennent en outre:
l'acquisition d'une condition de filtrage correspondant à l'appel, la condition de filtrage étant configurée par un utilisateur; et
la sélection des données vocales en fonction de la condition de filtrage parmi les données vocales acquises;
la génération d'un enregistrement de données vocales conformément aux données vocales en fonction de la condition de filtrage, et la mémorisation de l'enregistrement de données vocales.

26. Produit-programme d'ordinateur selon la revendication 25, **caractérisé en ce que** les étapes comprennent en outre:
l'envoi d'une demande de recherche d'un enregistrement de données vocales au système;
la réception d'un enregistrement de données vocales correspondant à la demande de recherche acquis par le système.
